Europäisches Patentamt

European Patent Office

Office européen des brevets

(11) Numéro de publication : **0 484 245 A1**

# (12) DEMANDE DE BREVET EUROPEEN

(21) Numéro de dépôt : **91402926.9**

(51) Int. Cl.⁵ : **B32B 25/14, B32B 25/20**

(22) Date de dépôt : **31.10.91**

(30) Priorité : **31.10.90 FR 9013531**

(43) Date de publication de la demande :
**06.05.92 Bulletin 92/19**

(84) Etats contractants désignés :
**AT BE CH DE DK ES GB GR IT LI LU NL SE**

(71) Demandeur : **TOTAL RAFFINAGE
DISTRIBUTION S.A.
84, rue de Villiers
F-92538 Levallois Perret Cédex (FR)**

(72) Inventeur : **Lemoine, Guy
81, rue Louis Delamare
F-76600 Le Havre (FR)**
Inventeur : **Benard, Etienne
13, rue Marcel Novet
F-76620 Le Havre (FR)**
Inventeur : **Exandier, Christian
22, rue des Belettes
F-76290 Le Fontenay (FR)**

(74) Mandataire : **Jolly, Jean-Pierre et al
Cabinet Jolly 54, rue de Clichy
F-75009 Paris (FR)**

(54) **Matériau composite à base de caoutchoucs de type silicone et de type éthylène-propylène copolymère ou terpolymère.**

㊼ L'invention concerne un matériau composite comprenant au moins deux couches d'élastomères, la première couche étant constituée d'une première composition comprenant entre 40 % et 80 % en poids de caoutchouc au silicone, tandis que la seconde couche est constituée d'une seconde composition comprenant entre 50 et 100 % en poids de caoutchouc de type éthylène propylène copolymère et/ou terpolymère.

Selon l'invention, la première composition contient également entre 20 et 60 % en poids de caoutchouc de type éthylène propylène copolymère et/ou terpolymère et chacune des deux compositions contient plus de 5 % et, de préférence, entre 5 et 60 % en poids de silice.

EP 0 484 245 A1

Jouve, 18, rue Saint-Denis, 75001 PARIS

La présente invention est relative à un matériau composite comprenant au moins deux couches d'élastomères, l'une contenant un caoutchouc de type silicone, l'autre contenant un caoutchouc éthylène-propylène copolymère et/ou terpolymère. L'invention concerne également des procédés de fabrication de ce composite.

Les élastomères de type silicone ont trouvé de nombreuses applications au cours des dernières années, en raison de certaines de leurs propriétés physiques, telles que, par exemple, leur bonne résistance à la chaleur, leur bon aspect de surface, leur caractère antiadhésif et leur stabilité en présence de charges colorantes.

Toutefois, les élastomères de type silicone demeurent assez coûteux comparativement aux élastomères tels que l'éthylènepropylène copolymère et/ou terpolymère, qui, par ailleurs, ont des propriétés mécaniques et une résistance à certains agents chimiques, aux huiles et aux carburants, supérieures à celles des caoutchoucs au silicone.

Une première technique a été proposée en vue de rendre compatibles ces deux types d'élastomères dans une même formulation de caoutchouc (voir à cet effet les brevets japonais n° 56 116 739 et européen n° 286 551).

Toutefois, pour que le matériau hybride ainsi obtenu présente des caractéristiques proches de celles des élastomères de type silicone, il est nécessaire d'y incorporer une quantité majeure (au moins 40 % en poids) du caoutchouc de type silicone et de compatibiliser (en particulier par greffage) les deux élastomères, ce qui entraîne un surcoût de fabrication relativement élevé.

Aussi a-t-on envisagé depuis longtemps de réaliser des matériaux composites associant dans un même élément des couches distinctes présentant les qualités propres à chacun de ces élastomères. Jusqu'à présent, il n'était cependant pas possible de vulcanise.r conjointement une couche d'élastomères de type silicone avec une couche de caoutchouc éthylènepropylène copolymère et/ou terpolymère. En effet (voir le brevet français n° 2 597 028), non seulement des phénomènes de diffusion conduisent à la détérioration des propriétés mécaniques de chacune des couches du composite, mais ces couches sont insuffisamment solidaires les unes des autres, de sorte que les risques de décollage limitent les utilisations de ce type de matériaux composites à quelques applications telles que la réalisation de tuyaux, tubes et gaines coaxiales.

Pour remédier à ces inconvénients, il a été proposé d'intercaler entre les couches D'élastomères de nature différente un mélange adhésif (voir brevet FR 1 489 261) ou un moyen d'accrochage (voir brevet FR 2 597 028 déjà cité), susceptible d'assurer le rôle de barrière de protection entre les deux couches d'élastomères. Toutefois, les problèmes liés au coût et à la résistance mécanique du moyen d'accrochage et du composite limitent le développement industriel de tels matériaux composites.

La présente invention vise à proposer un nouveau matériau composite comprenant au moins deux couches d'élastomères, l'une contenant principalement un caoutchouc de type silicone et l'autre contenant un caoutchouc de type éthylènepropylène copolymère et/ou terpolymère, qui ne nécessite pas un matériau intermédiaire de protection et dont les couches soient néanmoins suffisamment solidaires l'une de l'autre, pour éviter tout arrachement ultérieur.

La Demanderesse a, en effet, découvert que, de façon surprenante, ce résultat avantageux pouvait être obtenu en incorporant dans chacune des deux couches du composite une quantité déterminée d'une silice ayant une surface spécifique et une granulométrie appropriées.

On sait qu'afin de rendre les élastomères aptes à un usage déterminé, il convient de leur incorporer, au cours de leur fabrication, un certain nombre d'agents vulcanisants, des plastifiants, des agents de mise en oeuvre, des additifs et surtout des charges renforçantes.

Parmi ces charges renforçantes, les plus utilisées sont en particulier les noirs de carbone, dans le cas des caoutchoucs éthylènepropylène copolymère et/ou terpolymère, et les silices, pour les caoutchoucs à base de silicone.

Dans le cadre de ses travaux sur la fabrication et la vulcanisation de matériaux composites comprenant au moins deux couches d'élastomères de nature différente, la Demanderesse a établi que, contrairement à ce qu'enseigne la technique antérieure, les deux couches de caoutchouc peuvent être covulcanisées aisément en une seule opération, tout en conservant à chacune des couches de bonnes propriétés physiques et en leur conférant des propriétés d'adhérence parfaite, dans la mesure où chacune des deux couches contient, au moins :

– du caoutchouc éthylène-propylène copolymère et/ou terpolymère en quantité substantielle, ce qui implique que la couche d'élastomère de type silicone contienne entre 20 % et 60 % en poids de caoutchouc éthylènepropylène copolymère et/ou terpolymère,

– une silice, de préférence de porosité déterminée, en une quantité supérieure à 5 % en poids et, de préférence, comprise entre 5 % et 60 % en poids du caoutchouc, dans chacune des deux couches d'élastomères, ce qui implique que la couche de type éthylènepropylène copolymère et/ou terpolymère contienne, de préférence, entre 10 et 15 % en poids de silice.

La présente invention a donc pour objet un matériau composite comprenant au moins deux couches d'élas-

2

tomères, la première couche étant constituée d'une première composition comprenant entre 40 % et 80 % en poids de caoutchouc au silicone, tandis que la seconde couche est constituée d'une seconde composition comprenant entre 50 et 100 % en poids de caoutchouc de type éthylène-propylène copolymère et/ou terpolymère, ledit matériau composite étant caractérisé en ce que la première composition contient également entre 20 et 60 % en poids de caoutchouc de type éthylènepropylène copolymère et/ou terpolymère et en ce que chacune des deux compositions contient plus de 5 % et, de préférence, entre 5 et 60 % en poids de silice.

Bien que la brevetabilité de l'invention ne soit pas liée à cette théorie et que cette explication ne soit peut-être pas la seule en cause dans le processus d'amélioration de l'adhérence entre chacune des couches d'élastomères, on peut supposer que les grains de silice proches de l'interface des deux couches développent la cohérence entre les élastomères appartenant à chacune d'elles et, lors de la vulcanisation, fixent mécaniquement et chimiquement les élastomères du type éthylènepropylène copolymère et/ou terpolymère, appartenant à chacune des couches. Il apparaît, en effet, que les silices, par le choix de leur taille, la structure de leurs grains et la chimie de leurs surfaces, peuvent entraîner la création d'un réseau et contribuer à la formation de liaison, plus ou moins fortes, entre polymères, éventuellement renforcées par la présence de divers agents de couplage judicieusement choisis.

Dans ce but, les silices utilisées dans les deux couches d'élastomères, conformément à la présente invention, sont de préférence des silices dites de combustion ou de précipitation, présentant un volume poreux (macroporosité) compris entre 150 et 250 m2/g, tel que déterminé par la méthode dite CTAB, à partir de cétyltriammonium.

En outre, lesdites silices peuvent avantageusement présenter une surface spécifique, mesurée selon la méthode BET, comprise entre 175 et 225 m2/g.

En plus de l'amélioration notable du pouvoir d'adhérence des deux couches d'élastomères l'une par rapport à l'autre, un deuxième avantage inhérent au choix de la silice est lié à la granulométrie de cette dernière: une silice de faible granulométrie permet d'obtenir une très bonne dispersion à faible concentration. En outre, l'augmentation de la viscosité des résines due à l'introduction de telles silices est largement compensée par l'effet plastifiant et dispersant de la gomme de polysiloxane introduite dans la couche de type silicone. On peut ainsi limiter considérablement la quantité d'huile de la formulation, ce qui a pour conséquence une diminution notable des possibilités de migration d'une couche à l'autre avant l'étape de vulcanisation. Les propriétés physiques du composite final -par exemple la tenue à la lumière, l'aspect de surface et la facilité de mise en oeuvre sous forme d'une très fine pellicule- s'en trouvent considérablement améliorées.

On pourra ainsi limiter la quantité d'huile présente dans la couche de caoutchouc du silicone à moins de 10 % en poids et même, de préférence, ne pas utiliser d'huile, par un choix approprié d'une silice possédant, par exemple, une dimension moyenne de particules primaires inférieure à 12 nanomètres et d'une gomme de polysiloxane.

Conformément à l'invention, la couche d'élastomère de type silicone aura, par exemple, exprimée en parties en poids, une composition du type :

($A_1$) 40 à 80 parties d'une gomme de diorganopolysiloxane de formule générale : $R_{3-a}(R'O)_aSiO(R_2SiO)_nSi(OR')_aR_{3-a}$, dans laquelle les symboles $\underline{R}$, identiques ou différents, représentent des radicaux hydrocarbonés en $C_1$-$C_8$, substitués ou non par des atomes d'halogène, ou des radicaux cyano, le symbole $\underline{R}'$ représente un atome d'hydrogène ou un radical alkyle en $C_1$-$C_4$, le symbole $\underline{a}$ représente zéro ou un, le symbole $\underline{n}$ représente un nombre ayant une valeur suffisante pour obtenir une viscosité d'au moins 1 million de mPa.s à 25°C, au moins 50% en nombre des radicaux représentés par $\underline{R}$ étant des radicaux méthyle et 0,005 à 0,5 mole % des motifs entrant dans la constitution de la gomme étant choisis parmi ceux de formules $(CH_2=CH)(R)SiO$ et $(CH_2=CH)R_{2-a}(R'O)_aSi_{0,5}$ ;

($B_1$) 60 à 20 parties d'une gomme éthylène-propylène copolymère et/ou terpolymère, comportant de 40 à 80 % en poids d'éthylène, de 60 à 20 % en poids de propylène et de 1 à 10 % en poids de diène monomère conjugué, ou un mélange de ces deux polymères, notamment un élastomère tel qu'un EPDM (éthylène propylène diène monomère) ;

($C_1$) 5 à 60 parties d'une silice choisie de préférence parmi les silices de combustion ou de précipitation ;

($D_1$) 5 à 80 parties d'autres charges minérales non renforçantes ;

($E_1$) 0 à 5 parties de composés ayant un rôle d'anti-oxygène ;

($F_1$) moins de 10 parties et, de préférence, moins de 1 partie, d'une huile organique ou minérale d'un type connu en soi ;

($G_1$) 2 à 10 parties d'un agent de réticulation, d'un type connu en soi ;

($H_1$) 0 à 25 parties de coagents de réticulation.

Comme constituant ($A_1$), on peut utiliser un unique diorganopolysiloxane du type défini ci-dessus, ou un mélange de tels composés.

Le constituant ($B_1$) est bien connu dans la technique et est disponible dans le commerce à l'état non vulcanisé. On peut utiliser l'EPDM, seul ou en mélange. En général le constituant (B₁) contient divers additifs connus, tels que des charges de renforcement ou de bourrage, des plastifiants, des pigments, des retardateurs de propagation de la flamme. Toutefois, les quantités de constituant (B₁) auxquelles on fait référence dans la présente description représentent les seuls polymères et n'incluent pas les additifs.

Les silices (C₁) peuvent être incorporées telles quelles ou après traitement par des composés organo siliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le dimétlhylvinylétlhoxysilane, le triméthylméthoxysilane. Lors de ce traitement, les silices peuvent accroître leur poids de départ jusqu'à un taux de 18 à 20 % environ. Ces silices doivent de préférence posséder une surface spécifique, une macroporosité et une granulométrie telles que précédemment décrites.

Les charges (D₁) sont constituées de charges minérales dont le diamètre particulaire moyen est supérieur à 100 nanomètres. Elles comprennent plus spécialement le quartz broyé, les argiles calcinées, le carbonate de calcium, des agents colorants tels que les oxydes de zinc, de fer, de titane, de cobalt, de magnésium et d'aluminium, ou des pigments colorants, minéraux ou organiques (tels que par exemple la phtalocyanine), le noir de carbone, les silicates de magnésium et d'aluminium, les sulfates d'aluminium, de calcium et de baryum, de l'amiante et des fibres de verre et de carbone, ainsi que des fibres synthétiques, d'aramide, de polyester, de polyamide et de rayonne.

Comme composés (E₁), on peut utiliser notamment des dérivés phénoliques.

L'huile minérale (F₁) sera, par exemple, une huile paraffiniques ou naphtènique, éventuellement hydrogénée, ou encore un ester de polyacide ou un autre dérivé d'acide ou d'anhydride.

L'agent de réticulation (G₁) est, notamment, un peroxyde organique tel- que, par exemple, le bis (2-4 dichlorobenzoyl) peroxyde, le dicumyle peroxyde, le 2,5 dimétlhyl 2-5 bis (tributylperoxy) hexane ou le bis (tertiobutyl-peroxyisopropyl) benzène. La réticulation peut cependant être également réalisée par irradiation ou par greffage de silanes réticulant à l'humidité.

Les coagents de réticulation (H₁) sont, par exemple, des polybutadiènes ou des polyméthacrylates, seuls, en mélange ou modifiés.

La couche dur composite à base d'éthylènepropylène copolymère ou terpolymère aura pour sa part, de préférence, la composition suivante :

(A₂) 50 à 100 parties d'une gomme d'un caoutchouc ;
(B₂) 0 à 50 parties d'un caoutchouc différent du caoutchouc (A₂) ;
(C₂) 5 à 60 parties d'une silice ;
(D₂) 10 à 200 parties d'une autre charge, renforçante ou non ;
(E₂) 0 à 5 parties d'au moins un composé antioxygène ;
(F₂) 0 à 150 parties d'une huile minérale ou organique ;
(G₂) 1 à 10 parties d'un agent réticulant ;
(H₂) 0 à 10 parties de produits pouvant favoriser, de façon connue en soi, la mise en oeuvre du composite ;
(I₂) 0 à 25 parties de coagents de réticulation.

La gomme de caoutchouc (A₂) sera, de préférence, du même type que la gomme choisie comme ingrédient (B₁) de la composition à base de silicone précédemment décrite. Cette gomme sera avantageusement un caoutchouc de type EPDM.

Le caoutchouc (B₂) pourra être choisi parmi les élastomères vulcanisables, tels que les caoutchoucs nitriles, SBR ou naturels, les fluoroélastomères, les polyéthylènes chlorosulfonés ou chlorés, les caoutchoucs acryliques, les caoutchoucs d'épichlorhydrine et, d'une façon générale, tous les élastomères vulcanisables présentant des propriétés complémentaires de celles du caoutchouc (A₂), ainsi que parmi les élastomères thermoplastiques qui ne nécessitent pas de vulcanisation et les plastomères non vulcanisables.

La silice (C₂) sera choisie, de préférence, parmi les silices de combustion ou de précipitation de même type que la silice choisie comme ingrédient (C₁) de la couche d'élastomère de type silicone précédemment décrite et, de préférence, identique à celle-ci.

La charge (D₂) sera, de préférence, le noir de carbone, mais pourra aussi être une charge telle que la charge (D₁) définie ci-dessus.

Le dérivé (E₂) sera, par exemple, un dérivé phénolique à haut poids moléculaire.

L'huile (F₂) pourra être d'un type connu en soi, par exemple, une huile paraffinique, hydrogénée ou non.

De même, l'agent réticulant (G₂) pourra être d'un type connu en soi, par exemple un peroxyde tel que ceux mentionnés ci-dessus parmi les agents (G₁) de la couche d'élastomère au silicone ou un dérivé soufré choisi pour son caractère non-migrant.

Le constituant (H$_2$) sera, par exemple, une cire de polyéthylène, un dérivé d'acide gras ou un glycérol habituellement utilisé dans ce type de composition.

L'agent de réticulation (I$_2$) pourra être un polybutadiène ou un polyméthacrylate, seul, en mélange ou modifié.

La préparation des compositions constitutives de chacune des deux couches D'élastomères peut être faite d'une façon usuelle à l'aide d'un mélangeur Banbury, ou d'un mélangeur en ligne. Cette préparation doit être naturellement réalisée en prenant garde que la température de la phase de mélange soit toujours inférieure à la température d'activation de l'agent de vulcanisation, lorsque ces agents sont introduits lors de cette phase.

Les deux compositions nécessaires à la fabrication de chacune des deux couches peuvent alors être covulcanisées en contact mutuel, par traitement thermique, de préférence sous pression. La vulcanisation se fera par exemple à une température de 100 à 200°C, durant trois minutes à trois heures, sous une pression comprise entre 2 et 20 MPa. Pour ce faire, on peut utiliser, de façon connue en soi, des bains de sel, des lits fluidisés, des traitements à air chaud ou des systèmes à ultra-haute fréquence.

Le matériau composite conforme à l'invention peut être préparé de façon connue en soi par moulage, compression, calandrage ou injection des deux couches et covulcanisation de celles-ci en contact mutuel.

Ce matériau composite peut aussi être fabriqué industriellement de façon particulièrement avantageuse par coextrusion. En effet, le choix des proportions relatives en silicone, silice et EPDM, précédemment décrites permet d'assurer la compatibilité et l'adhésion des deux couches sans utilisation d'un tiers compatibilisant ou autre système d'accrochage, de sorte que la fabrication industrielle du matériau composite peut être réalisée directement par coextrusion sur double extrudeuse, suivie d'une covulcanisation.

La présente invention a été mise en oeuvre dans les exemples qui vont suivre. Ceux-ci ne sont présentés qu'à titre d'illustration de l'invention et ne présentent aucun caractère limitatif.

<u>EXEMPLE 1</u>

Un certain nombre d'éprouvettes de caoutchoucs bicouches sont réalisées dans les conditions suivantes :

On prépare une feuille de caoutchouc au silicone à partir d'une éprouvette en couche mince, d'une épaisseur d'environ 1 mm, choisie en vue de réaliser une couche externe possédant de bonnes qualités de brillance, de glisse, de résistance à l'ozone, de tenue à la lumière et de bonne stabilité de teinte. Il est en effet bien connu que les caoutchoucs au silicone de couleur blanche ne jaunissent pas, contrairement à leurs homologues à base de caoutchoucs éthylène propylènecopolymère et/ou ter-polymère.

On prépare ensuite une feuille épaisse (environ 1 cm d'épaisseur) de caoutchouc éthylène propylène copolymère, à l'aide d'une éprouvette à base d'EPDM, choisi en particulier en vue de ses bonnes propriétés mécaniques et de son prix modéré.

Ces deux feuilles sont ensuite covulcanisées sous presse, en contact mutuel, dans les conditions suivantes :
- durée :        4 à 5 minutes,
- pression :      50 à 100 bars,
- température :    150 à 180°C (suivant la nature du peroxyde).

Les diverses formulations des compositions constituant les deux couches, ainsi que les propriétés du composite résultant de leur covulcanisation, sont données dans le Tableau 1 ci-après, dans le but de montrer l'importance relative des divers composants de chacune des couches.

Dans ce tableau, l'élastomère silicone utilisé est du polysiloxane fourni par la Société RHONE POULENC, sous la référence SIL 11, tandis que l'élastomère éthylène propylène copolymère et/ou terpolymère est un EPDM fourni par la Société TOTAL CHIMIE, sous la référence EP TOTAL 035. En outre, la silice utilisée est une silice de combustion, dont la macroporosité (CTAB) est de 200 m$^2$/g, la surface spécifique de 200 m$^2$/g et la granulométrie de 12 nanomètres. Cette silice est fournie par la Société DEGUSSA sous la référence Aérosil 200.

Les compositions figurant dans ce tableau sont exprimées, comme il est usuel chez les caoutchoutiers, en parties en poids par rapport à 100 parties de gomme (gomme EPDM et/ou gomme silicone).

TABLEAU 1

| Composite | $E_1$ | $E_2$ | $E_3$ | $E_4$ | $E_5$ | $E_6$ | $E_7$ | $E_8$ | $E_9$ |
|---|---|---|---|---|---|---|---|---|---|
| **Caoutchouc au silicone** | | | | | | | | | |
| Gomme silicone | 100 | 100 | 90 | 80 | 60 | 60 | 60 | 50 | 40 |
| Gomme EPDM | 0 | 0 | 10 | 20 | 40 | 40 | 40 | 50 | 60 |
| Silice (*) | 28 | 28 | 25 | 32 | 32 | 17 | 17 | 24 | 12 |
| $TiO_2$ | 10 | 10 | 10 | 10 | 10 | 10 | 10 | 10 | 10 |
| ZnO | 10 | 10 | 10 | 10 | 10 | 10 | 10 | 10 | 10 |
| Huile paraffinique | 0 | 0 | 0 | 0 | 0 | 0 | 15 | 0 | 0 |
| Silane | 0,5 | 0,5 | 0,5 | 0,5 | 0,5 | 0,5 | 0,5 | 0,5 | 0,5 |
| Peroxyde | 7 | 7 | 7 | 7 | 7 | 7 | 7 | 7 | 7 |
| **Caoutchouc EPDM** | | | | | | | | | |
| Gomme EPDM | 100 | 100 | 100 | 100 | 100 | 100 | 100 | 100 | 100 |
| Silice (*) | 10 | 0 | 5 | 10 | 10 | 0 | 10 | 15 | 15 |
| Noir de carbone | 130 | 130 | 130 | 130 | 130 | 130 | 130 | 130 | 130 |
| Huile paraffinique | 80 | 80 | 80 | 80 | 80 | 80 | 80 | 80 | 80 |
| ZnO | 5 | 5 | 5 | 5 | 5 | 5 | 5 | 5 | 5 |
| Peroxyde | 7 | 7 | 7 | 7 | 7 | 7 | 7 | 7 | 7 |
| **Propriétés du composite** | | | | | | | | | |
| Aspect | ++ | ++ | ++ | ++ | ++ | ++ | ++ | ++ | + |
| Adhérence | - | - | - | + | ++ | - | - | ++ | - |
| Peeling (daN/cm) | 0 | 0 | 0,5 | >2 | >2,5 | 0 | 0,5 | >3 | 1 |

(*) quantité totale de silice dans la couche d'élastomère.

En considérant ce tableau, on constate que :
- l'aspect extérieur de la couche à base de silicone n'est réellement satisfaisant que lorsque cette couche contient au moins 40 % en poids de caoutchouc silicone ;
- pour obtenir une bonne adhérence (la résistance au "Peeling" devant être supérieure à 1,5 et de préférence à 2), deux conditions doivent être réunies (voir composites $E_4$, $E_5$ et $E_8$) : d'une part, la teneur en caoutchouc de type EPDM doit être supérieure à au moins 20 % en poids, d'autre part, la teneur en silice de la couche à base d'EPDM doit être supérieure à 10 % de poids du caoutchouc.

## EXEMPLE 2

Un certain nombre d'éprouvettes de caoutchouc bicouche sont réalisées dans les mêmes conditions de covulcanisation sous presse, en contact mutuel, que dans l'Exemple 1, à partir des mêmes formulations que celles de l'éprouvette $E_8$ mentionnée au Tableau 1, mais en faisant varier cette fois la qualité des silices utilisées. Ces dernières sont fournies par les Sociétés RHONE-POULENC (Zeosil) et DEGUSSA (Aerosil).

Le Tableau 2 ci-après montre comment évolue l'adhérence des deux couches du composite en fonction de la qualité de la silice.

## TABLEAU 2

| Composite | $E_{10}$ | $E_{11}$ | $E_{12}$ |
|---|---|---|---|
| Silice | Aerosil 200 | Zeosil 35 | Zeosil 175 |
| Macroporosité $(m^2/g)$ | 200 | 90 | 185 |
| Taille moyenne des grains (nanomètres) | 12 | 30 | 200(*) |
| Adhérence : (daN/cm) | ++ >3 | - 0,5 | + 1,5 |

(*) Perles : 200 nanomètres au niveau agrégats.

On voit que le maintien de la macroporosité au dessus d'environ 150 m2/g est le facteur prépondérant en ce qui concerne l'obtention D'une bonne adhérence, mais que, toutefois, dès que l'on approche de cette limite (voir le composite $E_{12}$), la taille des grains joue un rôle important. Ainsi, avec des perles de silice de 200 nanomètres, l'adhérence est tout juste satisfaisante, bien que la macroporosité soit de 185 m2/g.

## EXEMPLE 3

L'exemple suivant a pour but d'illustrer l'intérêt d'un matériau composite selon l'invention, dont la couche de caoutchouc à base de silicone est une couche très mince de parement, qui adhère à une autre couche de caoutchouc de type EPDM, choisie principalement en fonction de ses qualités physiques intrinsèques et de son coût.

La formulation des deux couches est encore identique à celle de l'essai $E_8$ de l'Exemple 1. Le matériau composite est cette fois fabriqué par coextrusion. A l'aide d'une double extrudeuse et grâce à l'excellente aptitude de la couche d'élastomère à base de silicone à être traitée (la viscosité Mouney avant coextrusion est d'environ 40), il est en effet possible de faire adhérer sur un profilé d'EPDM de couleur noire une très fine couche de parement (blanche) à base de caoutchouc au silicone.

Le profilé $E_{13}$ ainsi préparé est exposé pendant environ 1000 heures à la lumière (Xenotest). Dans le

7

Tableau 3 suivant, le résultat de l'essai est comparé à celui obtenu avec deux échantillons témoins ayant subi le même Xenotest :
- l'un ($T_1$) est une éprouvette à base de caoutchouc au silicone du même type que la couche de parement, mais non covulcanisable, car sans EPDM incorporé,
- l'autre ($T_2$) est une éprouvette de caoutchouc EPDM de couleur blanche.

TABLEAU 3

| Composite | $E_{13}$ | $T_1$ | $T_2$ |
|---|---|---|---|
| Tenue à la lumière après 1000 heures | 8 | 8 | 2 |

On constate sur ce tableau (voir essais $E_{13}$ et $T_1$) que la couche de parement présente la même qualité d'insensibilité à l'action de la lumière qu'un caoutchouc purement au silicone, mais qu'elle présente en plus les qualités de compatibilité et d'adhérence précédemment décrites dans l'exemple 1. On constate également que cette fine couche de parement confère au matériau bicouche conforme à l'invention une qualité esthétique indéniable (voir colonnes $E_{13}$ et $T_2$), puisque le profilé blanc à base de EPDM pur, soumis au même traitement lumineux, jaunit considérablement, ce qui le rend impropre à certains usages industriels.

**Revendications**

1. Matériau composite comprenant au moins deux couches d'élastomères, la première couche étant constituée d'une première composition comprenant entre 40 % et 80 % en poids de caoutchouc au silicone, tandis que la seconde couche est constituée d'une seconde composition comprenant entre 50 et 100 % en poids de caoutchouc de type éthylène propylène copolymère et/ou terpolymère, ledit matériau composite étant caractérisé en ce que la première composition contient également entre 20 et 60 % en poids de caoutchouc de type éthylène propylène copolymère et/ou terpolymère et en ce que chacune des deux compositions contient plus de 5 % et, de préférence, entre 5 et 60 % en poids de silice.

2. Matériau composite selon la revendication 1, caractérisé en ce que les silices utilisées dans les deux compositions d'élastomères ,sont des silices dites de combustion ou de précipitation, présentant un volume poreux (macroporosité) compris entre 150 et 250 m²/g selon la méthode dite CTAB au cétyltriammonium.

3. Matériau composite selon l'une des revendications 1 et 2, caractérisé en ce que lesdites silices possèdent de préférence une dimension moyenne de particules primaires inférieure à 14 nanomètres.

4. Matériau composite selon l'une des revendications 1 à 3, caractérisé en ce que la quantité d'huile, hydrogénée ou non, présente dans ladite première couche à base de silicone, est inférieure à 10 % en poids et, de préférence, à 1 % en poids du caoutchouc.

5. Matériau composite selon l'une quelconque des revendications 1 à 4, caractérisé en ce que le caoutchouc au silicone de ladite première couche est un diorganopolysiloxane.

6. Matériau composite selon l'une quelconque des revendications 1 à 5, caractérisé en ce que le caoutchouc éthylène propylène copolymère et/ou terpolymère contenu dans les deux couches est un copolymère d'éthylène-propylène comportant environ 40 à 80 % en poids d'éthylène et 60 à 20 % en poids d'un propylène-diène monomère qui comprend de 40 à 80 % en poids d'éthylène, de 60 à 20 % en poids de propylène et de 1 à 10 % en poids de diène monomère conjugué, ou un mélange de ces deux copolymères.

7. Matériau composite selon l'une quelconque des revendications 1 à 6, caractérisé en ce que l'agent de vulcanisation de la couche d'élastomère à base de silicone est un peroxyde.

8. Matériau composite selon l'une quelconque des revendications 1 à 7, caractérisé en ce que la couche à base de caoutchouc au silicone contient 5 à 80 parties en poids de charges colorantes telles que des oxydes de zinc, de fer, de titane, de cobalt, de magnésium ou d'aluminium ou des pigments minéraux ou organiques, pour 100 parties en poids de gomme.

9. Matériau composite selon l'une les revendications 1 à 8, caractérisé en ce que la première couche à base de silicone est utilisée comme couche de parement du matériau d'une épaisseur inférieure à 1 mm et, de préférence, comprise entre 0,1 et 0,5 mm.

10. Procédé de préparation d'un matériau composite selon l'une quelconque des revendication 1 à 9, caractérisé en ce que le matériau composite est fabriqué directement par coextrusion des première et deuxième couches et covulcanisation de celles-ci.

11. Procédé de préparation d'un matériau composite selon l'une quelconque des revendication 1 à 10, caractérisé en ce que le matériau composite est réalisé par moulage, compression, injection ou calandrage sur un autre support des première et deuxième couches et par covulcanisation en contact mutuel de celles-ci.

Office européen
des brevets

**RAPPORT DE RECHERCHE EUROPEENNE**

Numero de la demande

EP    91 40 2926

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 597 028  (HUTCHINSON)<br>* Revendications *<br>--- | 1 | B 32 B   25/14<br>B 32 B   25/20 |
| A | WO-A-8 602 088  (BATTELLE DEVELOPMENT CORP.)<br>* Revendications *<br>--- | 1 | |
| A | EP-A-0 314 396  (MITSUI PETROCHEMICAL INDUSTRIES LTD)<br>* Page 3, lignes 15-35;  revendications *<br>--- | 1 | |
| A | US-A-4 714 733  (ITOH et al.)<br>* Revendications *<br>----- | 1 | |

DOMAINES TECHNIQUES RECHERCHES (Int. Cl.5)

B 32 B
C 08 K
C 08 L

Le présent rapport a été établi pour toutes les revendications

| Lieu de la recherche | Date d'achèvement de la recherche | Examinateur |
|---|---|---|
| LA HAYE | 18-12-1991 | DE JONGE S.J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

10